Europäisches Patentamt

European Patent Office

Office européen des brevets

(19)

(11) Publication number: **0 381 225**

**A2**

(12)

# EUROPEAN PATENT APPLICATION

(21) Application number: 90102081.8

(22) Date of filing: 02.02.90

(51) Int. Cl.⁵: **G06F 9/30, G06F 9/26**

The title of the invention has been amended (Guidelines for Examination in the EPO, A-III, 7.3).

(30) Priority: 03.02.89 JP 24863/89

(43) Date of publication of application:
08.08.90 Bulletin 90/32

(84) Designated Contracting States:
DE FR GB

(71) Applicant: **NEC CORPORATION**
**7-1, Shiba 5-chome Minato-ku**
**Tokyo 108-01(JP)**

(72) Inventor: **Ushimaru, Yumiko**
**c/o NEC Corporation, 33-1, Shiba 5-chome**
**Minato-ku, Tokyo(JP)**

(74) Representative: **Betten & Resch**
**Reichenbachstrasse 19**
**D-8000 München 5(DE)**

(54) Microprogrammed control unit for executing a string transfer instruction at increased speed.

(57) For transferring bytes forming a character string or a bit string at a high speed in response to a string instruction, a microprogrammed control unit comprises a storage facility (13) storing a micro-instruction code set, a program counter (14) memorizing an address code indicative of the address assigned to the micro-instruction code accessed, a decoder (17) supplied with the micro-instruction code and producing various control and/or data signals, a loop counter (19) storing a data code indicative of the number of bytes not to be transferred and associated with a subtracter (20), a count value detector (21) checking the data code to see whether or not the value indicated by all of the bits and the value indicated by higher order bits respectively reach predetermined values and a branch controller (18) responsive to the control signals and executing first and second branch operations in the presence of reporting signals indicative of reaching the predetermined values, respectively, and plural bytes are transferred in a single transferring operation after the first branch operation, but a single byte is transferred in the single trans ferring operation for completing the string instruction between the first and second branch operations.

FIG. 2

## MICROPROGRAMMED CONTROL UNIT RESPONSIVE TO A STRING INSTRUCTION AT AN IMPROVED SPEED

### FIELD OF THE INVENTION

This invention relates to a processor and, more particularly, to a microprogrammed control unit incorporated in a microprocessor by way of example.

### DESCRIPTION OF THE RELATED ART

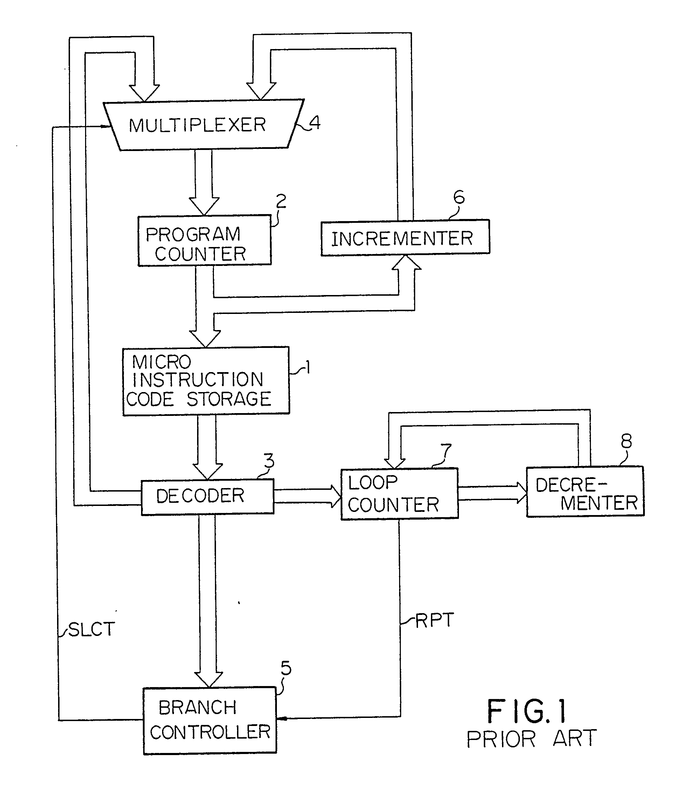

A microprogrammed control unit is responsive to a string instruction code indicative of an instruction for transferring a character string or a bit string, and the arrangement of such a prior art microprogrammed control unit is illustrated in Fig. 1. When the string instruction is given, the character string or the bit string is divided into a plurality of bytes, and the individual bytes are transferred to a destination through a repetition of a transferring operation.

Referring to Fig. 1 of the drawings, a set of micro-instruction codes are stored in a micro-instruction code storage 1, however, the string instruction is of the macro instruction and achieved by a sequence of the micro-instruction codes. The micro-instruction code storage 1 is associated with a program counter 2 and a decoder 3, and the program counter 2 supplies an address signal representative of a program address to the micro-instruction code storage 1. The program address stored in the program counter is replaced with a new program address through a multiplexer 4. The multiplexer is responsive to a control signal SLCT fed from a branch controller 5, and is transparent to either signal fed from the decoder 3 or an incrementer 6 depending upon the level of the control signal SLCT. The decoder 3 is associated with a loop counter 7 and maintains a counting value. Since the loop counter 7 is coupled to a decrementer 8, the counting value is automatically decremented by the decrementer 8 upon decoding a micro-instruction code. If the counting value reaches zero, the loop counter 7 supplies the branch controller 5 with a reporting signal RPT of a high level indicative of the counting value of zero. However, the reporting signal RPT remains in a low level while the counting value is greater than zero.

The string instruction is terminated with the report signal RPT or with an interrupt fed from the outside thereof, however, description is focused upon the termination with the report signal for the sake of simplicity.

Assuming now that a microprocessor equipped with the microprogrammed control unit shown in Fig. 1 enters a loop for the string instruction, the string instruction provides a starting address to a program counter 2 through a path (not shown), and the micro-instruction codes are sequentially read out from the micro-instruction code storage 1 to the decoder 3. The sequence of the micro-instruction codes consists of a sub-loop for transferring a byte of the character string or the bit string, and the sequence of the micro-instruction codes are repeatedly executed for completely transferring the character string of the bit string. When each micro-instruction code is decoded, various control and/or data signals take place for the byte transfer operation. The sequence starts with providing the number of the bytes forming the character string or the bit string, namely, the number of bytes is firstly supplied from the decoder 3 to the loop counter 7, and the first byte is, thereafter, transferred to the destination. When a byte is transferred, the number stored in the loop counter 7 is decremented, and the sub-loop for the byte transferring operation is repeated until loop counter 7 indicates zero. In detail, the loop counter supplies the report signal RPT to the branch controller 5, and the branch controller 5 is acknowledged that all of the bytes have been transferred. Namely, the sub-loop contains not only the byte transferring instruction code but also a conditional branch instruction code JZLC, and the conditional branch instruction code JZLC is ignored by the branch controller 5 in so far as the reporting signal RPT remains in the low level. While the branch controller 5 ignores the conditional branch instruction JZLC, the control signal SLCT remains in a deactive level, and the multiplexer 4 transfers the address from the incrementer 6 to the program counter. Then, the control reiterates the sub-loop for repetition of the byte transferring operation.

However, upon completion of the transferring operation of the character string or the bit string, the reporting signal RPT goes up to the high level, and, accordingly, the branch controller 5 is responsive to the conditional branch instruction code JZLC. Namely, when the conditional branch instruction code is decoded, the data and/or control signals are fed to the branch controller 5. A part of the data and/or control signals is indicative of an address location to which the control should proceed, and the signal indicative of the new address is supplied to the multiplexer 4. The branch controller 5 produces the control signal SLCT of an active level in the co-presence of the reporting signal RPT and the other part of the data and/or control signals fed from the decoder 3. With the control signal SLCT of the active level, the multiplexer 4 becomes transparent to the signal indicative of the new address, and the control exits from the loop for the string instruction.

However, a problem is encountered in the prior art microprogrammed control unit in that the loop for the string instruction consumes a long time period. This is because of the fact that the sub-loop contains the conditional branch instruction code which is repeatedly decoded but ignored by the branch controller until the reporting signal RPT is shifted to the active level.

## SUMMARY OF THE INVENTION

It is therefore an important object of the present invention to provide a microprogrammed control unit which executes the string instruction in a relatively short time period.

To accomplish these objects, the present invention proposes to transfer a plurality of bytes in a single transfer operation, then repeating the transferring operation until most of the bytes are transferred, then transferring a single byte in a single transfer operation until all of the bytes are transferred .

In accordance with one aspect of the present invention, there is provided a microprogrammed control responsive to a string instruction for transferring a predetermined number of bytes of a character string or a bit string through a plurality of transferring operations, comprising: a) a loop counter for memorizing a multi-bit data code indicative of the number of the bytes which have not been transferred yet; b) calculating means operative to vary the number of the bytes indicated by the multi-bit data code; c) first branch controlling means for executing a first branch operation when the data code except for at least the least significant bit indicates a first preselected value; d) second branch controlling means for executing a second branch operation when the multi-bit data code indicates a second preselected value; and e) deciding means for making a decision that the predetermined number of bytes have been already transferred after the first branch operation and, thereafter, the second branch operation is completed, in which a plurality of bytes is simultaneously transferred in each transferring operation before the first branch operation, and in which each byte is transferred in each transferring operation before the second branch operation.

In accordance with another aspect of the present invention, there is provided a microprogrammed control unit responsive to a string instruction for transferring a predetermined number of bytes of a character string or a bit string through a plurality of transferring operations, comprising; a) a micro-instruction code storage operative to store a set of micro-instruction codes respectively assigned to addresses; b) a program counter operative to memorize an address code indicative of one of the addresses in a re writeable manner; c) a decoder operative to produce a plurality of data and/or control signals on the basis of the micro-instruction code read out from the micro-instruction code storage, the plurality of data and/or control signals including a data signal indicative of the predetermined number of the bytes, first and second control signals respectively indicative of first and second branch operations and an address signal indicative of the address assigned the micro-instruction code firstly read out in the first or second branch operation; d) a loop counter operative to store the data signal in a rewriteable manner; e) a subtracter operative to decrease the value indicated by the data signal and to feed back the data signal to the loop counter; f) a count value detecting circuit operative to produce a first reporting signal when higher order bits of the data signal indicate a first predetermined value, the count value detecting circuit further producing a second reporting signal in the presence of the data signal indicative of a second predetermined value; g) a branch controller operative to produce a selecting signal in the co-presence of the first control signal and the first reporting signal and of the second control signal and the second reporting signal; h) an incrementer operative to increment the address indicated by the address code and producing another address signal; and i) a multiplexer operative to transfer the address signal to the program counter in the presence of the selecting signal for the first branch operation and to transfer the other address signal to the program counter in the absence of the selecting signal for the second branch operation, in which a plurality of the bytes are simultaneously transferred to in each transferring operation before the first branch operation, and in which each byte is transferred in each transferring operation between the first and second branch operations, wherein the string instruction is decided to be completed upon the second branch operation.

In accordance with still another aspect of the present invention, there is provided a microprogrammed control unit responsive to a string instruction for transferring a predetermined number of bytes of a character string or a bit string through a plurality of transferring operations, comprising: a) a micro-instruction code storage operative to store a set of micro-instruction codes respectively assigned to addresses; b) a program counter operative to memorize an address code indicative of one of the addresses in a rewriteable manner; c) a decoder operative to produce a plurality of data and/or control signals on the basis of the micro-instruction code read out from the micro-instruction code storage, the plurality of data and/or control signals including a first data signal indicative of the predetermined number of the bytes, a second data signal indicative of the number of the bytes capable of receipt, first and second control signals respectively indicative of first and second branch operations and an address signal indicative of the address assigned the micro-instruction code firstly read out in the first or second branch operation; d) a first loop counter operative to store the first data signal in a rewriteable manner; e) a first subtracter operative to decrease the value indicated by the first data signal and to feed back the first data signal to the first loop counter; f) a first count value detecting circuit operative to produce a first preliminary reporting signal when higher order bits of the first data signal indicate a first predetermined value, the first count value detecting circuit further producing a second preliminary reporting signal in the presence of the first data signal indicative of a second predetermined value; g) a second loop counter operative to store the second data signal in a rewriteable manner; h) a second subtracter operative to decrease the value indicated by the second data signal and to feed back the second data signal to the second loop counter; i) a second count value detecting circuit operative to produce a first preliminary reporting signal when higher order bits of the second data signal indicate the first predetermined value, the second count value detecting circuit further producing a second preliminary reporting signal in the presence of the second data signal indicative of the second predetermined value; j) a first OR gate operative to produce a first reporting signal in the presence of either first preliminary reporting signal; k) a second OR gate operative to produce a second reporting signal in the presence of either second preliminary reporting signal; 1) a branch controller operative to produce a selecting signal in the co-presence of the first control signal and the first reporting signal and of the second control signal and the second reporting signal; m) an incrementer operative to increment the address indicated by the address code and producing another address signal; and n) a multiplexer operative to transfer the address signal to the program counter in the presence of the selecting signal for the first branch operation and to transfer the other address signal to the program counter in the absence of the selecting signal for the second branch operation, in which a plurality of the bytes are simultaneously transferred to in each transferring operation before the first branch operation, and in which each byte is transferred in each transferring operation between the first and second branch operations, wherein the string instruction is decided to be completed upon the second branch operation.

## BRIEF DESCRIPTION OF THE DRAWINGS

The features and advantages of a microprogrammed control unit according to the present invention will be more clearly understood from the following description taken in conjunction with the accompanying drawings in which:

Fig. 1 is a block diagram showing the prior art microprogrammed control unit;

Fig. 2 is a block diagram showing the arrangement of a microprogrammed control unit according to the present invention;

Fig. 3 is a logic diagram showing the arrangement of a count value detecting circuit incorporated in the microprogrammed control unit shown in Fig. 2;

Fig. 4 is a flow chart showing the program sequence executed by the microprogrammed control unit shown in Fig. 2 for a string instruction; and

Fig. 5 is a block diagram showing the arrangement of another microprogrammed control unit embodying the present invention.

## DESCRIPTION OF THE PREFERRED EMBODIMENTS

### First Embodiment

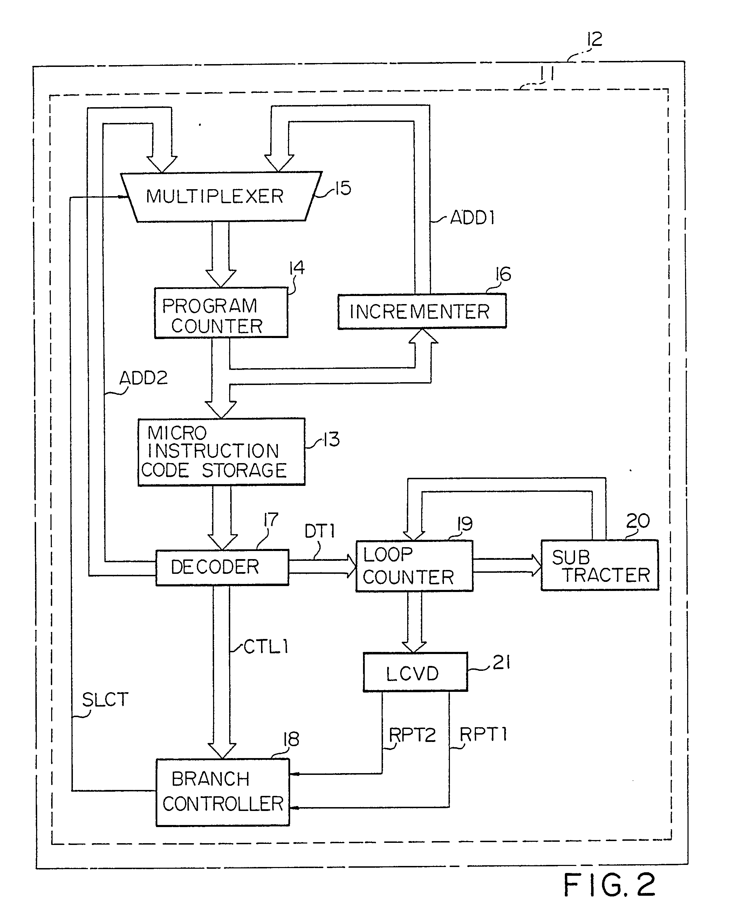

Referring first to Fig. 2 of the drawings, a microprogrammed control unit 11 embodying the present invention is incorporated in a microprocessor 12. Although various component units are incorporated with the microprogrammed control unit 11, no description is incorporated because such a component unit is well know in the art.

The microprogrammed control unit 11 comprises a micro-instruction code storage 13 for storing a micro-instruction code set, and the micro-instruction code storage 13 is formed by a read only memory (ROM). The micro-instruction code set contains various transferring instruction codes, arithmetic instruction codes, conditional and unconditional branch instruction codes and so forth which are assigned to respective address locations. The micro-instruction code storage 13 is associated with a program counter 14 where an address code indicative of one of the address locations is memorized for reading out the micro-instruction code from the storage 13. The address code is supplied through a multiplexer 15 and the multiplexer 15 is coupled to an incrementer 16 as well as a decoder 17. The incrementer 16 is operative to automatically increment the address for producing a new address code represented by an address signal ADD1, and the decoder 17 produces various data and control signals on the basis of the micro-instruction code read out from the micro-instruction code storage 13. The signals thus produced by the decoder 17 contain an address signal ADD2 indicative of an address code, a control signal CTL1 fed to a branch controller 18 for execution of conditional or unconditional branch and a data signal DT1 representative of the number of bytes forming a character string or a bit string. The branch controller 18 produces a selecting signal SLCT of either high or low level, and the selecting signal SLCT is fed to the multiplexer 15. Namely, with the selecting signal SLCT of the high level, the multiplexer 15 becomes transparent to the address signal ADD2, however, the address signal ADD1 is allowed to pass through the multiplexer 15 in the presence of the selecting signal SLCT of the low level.

The decoder 17 is further coupled to a loop counter 19 where the data signal DT1 indicative of the number of the bytes is memorized in the form of digital code. The loop counter 19 is associated with a subtracter 20, and the number of the bytes memorized in the loop counter 19 is automatically decreased by the subtracter 20. The data code thus decreased is fed back to the loop counter 19 and memorized therein. The loop counter 19 is further coupled to a count value detecting circuit 21, and the count value detecting circuit 21 is abbreviated as "LCVD" in Fig. 2.

The count value detecting circuit 21 behaves as follows. The data code indicative of the number of the bytes is formed by a bit string, and the count value detecting circuit 21 produces a first reporting signal RPT1 of the high level if the bits of the data code except for the lowest two bits are representative of value "0". The count value detecting circuit 21 further produces a second reporting signal RPT2 of the high level in the presence of the data code the all of the bits of which are indicative of value "0". However, these reporting signals RPT1 and RPT2 remain in the low level except for the above mentioned cases. The first and second reporting signals RPT1 and RPT2 are supplied to the branch controller 18 and are causative of first and second branch operations. The branch instruction codes respectively linked with the reporting signals RPT 1 and RPT2 are hereinbelow marked with "JZMLC" and "JZLC", respectively.

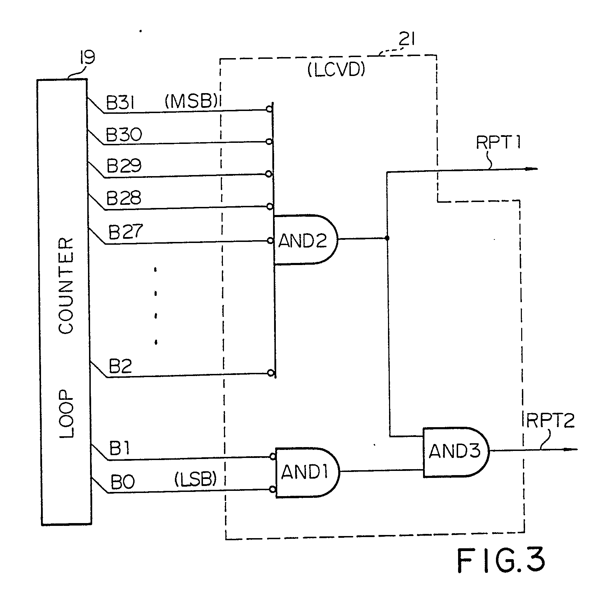

Turning to Fig. 3 of the drawings, the count value detecting circuit 21 comprises three AND gates AND1, AND2 and AND3. The loop counter 19 is of the 32- bit counter, and, accordingly, thirty two output nodes are assigned the 32 bits of the data code B0 to B31, respectively. The bit B0 is the least significant bit, and the bit B31 is the most significant bit. Inverters (respectively represented by bubbles) are coupled between the output nodes of the loop counter 19 and the AND gates AND1 and AND2. The AND gate AND1 is provided in association with the lowest two bits B0 and B1, and the higher order bits B2 to B31 are supplied to the AND gate AND2. If the bits B2 to B31 are on "0" level and, accordingly, indicative of value "0", the AND gate AND2 yields the first reporting signal RPT1 regardless of the lowest two bits B0 and B1. If all of the bits B0 to B31 are indicative of value "0", not only the AND gate AND 2 but also the AND gate AND1 produces the output signals of "1" level, so that the AND gate AND3 yields the second reporting signal RPT2 as described hereinbefore.

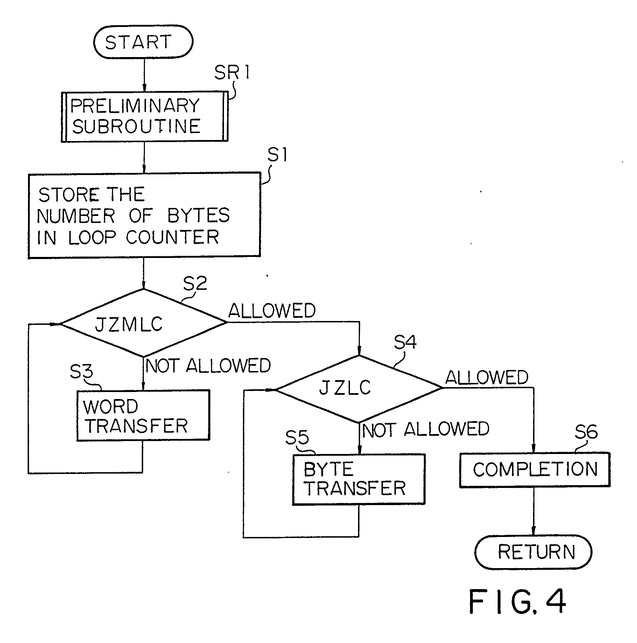

Subsequently, description is made on the behavior of the microprogrammed control unit 11 with reference to Fig. 4 on the assumption that the microprocessor 11 enters a loop for a job requested by the string instruction. The loop starts with providing a starting address code to the program counter 2. The address code is sequentially incremented by the incrementer 16, and a control of the microprogrammed control unit 11 executes a preliminary subroutine program as by step SR1. In the preliminary subroutine program, a starting address of a memory space (not shown) assigned the character string or the bit string is specified, and a memory space of a destination is further designated. The microprogrammed control unit then calculates the total number of bytes forming the character string or the bit string.

When the preliminary subroutine program is completed, the control proceeds to step S1 for providing the number of the bytes to the loop counter 19. Namely, the address code stored in the program counter 14 allows a micro instruction code to be read out from the micro instruction code storage 13 to the decoder 17, and the decoder 17 produces the data signal DT1 indicative of the number of the bytes calculated in the preliminary subroutine program SR1. The address code stored in the program counter 14 is incremented by the incrementer 16, and the branch instruction code JZMLC is read out from the micro instruction code storage 13. When the branch instruction code JZMLC is decoded, the decoder 17 produces the address signal ADD2 indicative of an address where the control is branched and, further, requests the branch controller 17 to check the first reporting signal RPT1 to see whether the first reporting signal RPT1 is in the high level or in the low level. If the first reporting signal RPT1 is in the low level, the execution of the branch operation is not allowed, and, for this reason, the branch controller 18 permits the selecting signal SLCT to remain in the low level. The multiplexer 15 is transparent to the address signal ADD1 in the presence of the selecting signal SLCT of the low level, so that no branch operation is exe cuted. The address signal ADD1 indicative of the subsequent address is memorized in the program counter 14, and the micro-instruction code next to the branch instruction code JZMLC is read out from the micro-instruction code storage 13. The subsequent micro-instruction code is indicative of a word transferring operation, and each word consists of four bytes in this instance. When the subsequent micro-instruction code is decoded, various control signals are produced by the decoder 17 and allows a single word of the character string or the bit string to be transferred to the destination as by step S3. When the branch instruction JZMLC is decoded, the data code is supplied from the loop counter 19 to the subtracter 20, and the value indicated by the data code in the loop counter 19 is decreased by four.

When the step 3 or the word transferring operation is completed, the address signal ADD1 indicative of the subsequent instruction code is provided to the program counter 14, and the control returns to the step 2. The branch instruction code JZMLC is read out from the micro-instruction code storage 13 again, and the decoder 17 requests the branch controller 18 to check the first reporting signal RPT1 to see whether the first reporting signal RPT1 is in the high or low level. The decoder further allows the subtracter 20 to decrease the value of the data code by four, and the word transferring operation is carried out again. Thus, the control repeats the sub-loop consisting of the steps S2 and S3 until the first reporting signal RPT1 is turned to the high level. When the first reporting signal RPT1 is shifted to the active level, most of the bytes forming the character string or the bit string have been already transferred to the destination. In fact, only three bytes are left and are indicated by the lowest two bits of "11". Since most of the bytes are thus transferred as in the form of word, the string instruction are rapidly completed.

If the first reporting signal RPT1 is shifted to the high level, the step S2 allows the control to be branched to step S4. Namely, the branch controller 18 shifts the selecting signal SLCT to the high level, and the multiplexer 15 becomes transparent to the address signal ADD2 produced by the decoder 17 on the basis of the branch instruction JZMLC. Then, the program counter 14 stores a new address assigned the branch instruction code JZLC, and the branch instruction code JZLC is read out from the micro instruction code storage 13 to the decoder 17. When the branch instruction code JZLC is decoded, the address signal ADD2 indicative of an address assigned the first instruction code of the second branch operation is produced, and the decoder 17 requests the subtracter 20 to decrease the value of the data code in the loop counter 19 by one. The decoder 17 further produces the control signal CTL1 fed to the branch controller 18, and the branch controller 18 checks the second reporting signal RPT2 to see whether the second reporting signal RPT2 is in the high or low level. If there is found that the second reporting signal RPT2 is given in the low level, the bytes forming the character string or the bit string is left in the memory (not shown), and the control proceeds to step S5. Namely, the multiplexer 15 is transparent to the address signal ADD1, and the micro instruction code next to the branch instruction code JZLC is read out from the micro instruction storage 13. The micro instruction code next to the branch instruction code JZLC requests a byte transferring operation, so that the decoder 17 produces various control signals so as to cause the component units of the microprocessor to transfer a single byte of the character string or the bit string to the destination. Since the multiplexer 15 is transparent to the address signal ADD1 in the presence of the selecting signal SLCT of the high level, the address code stored in the program counter 14 is incremented by the incrementer 16, and the subsequent micro instruction allows the control to return to the step S4. Thus, the control repeats a sub-loop con sisting of the steps S4 and S5, and the bytes of the character string or the bit string are successively transferred to the destination through repetition of the sub-loop. When all of the bytes are transferred to the destination, all the bits of the data code indicate value "0", and the count value detecting circuit 21 produces the second reporting signal RPT2. With the second reporting signal RPT2, the second branch operation takes place, and the step S4 allows the control to be branched to step S6 where the string instruction is decided to be completed. Then, control returns to, for example, a main routine program. Thus, after the first branch operation, the bytes are transferred in the byte to byte fashion, and, for this reason, all of the bytes forming the character string or the bit string are completely transferred to the destination.

Second Embodiment

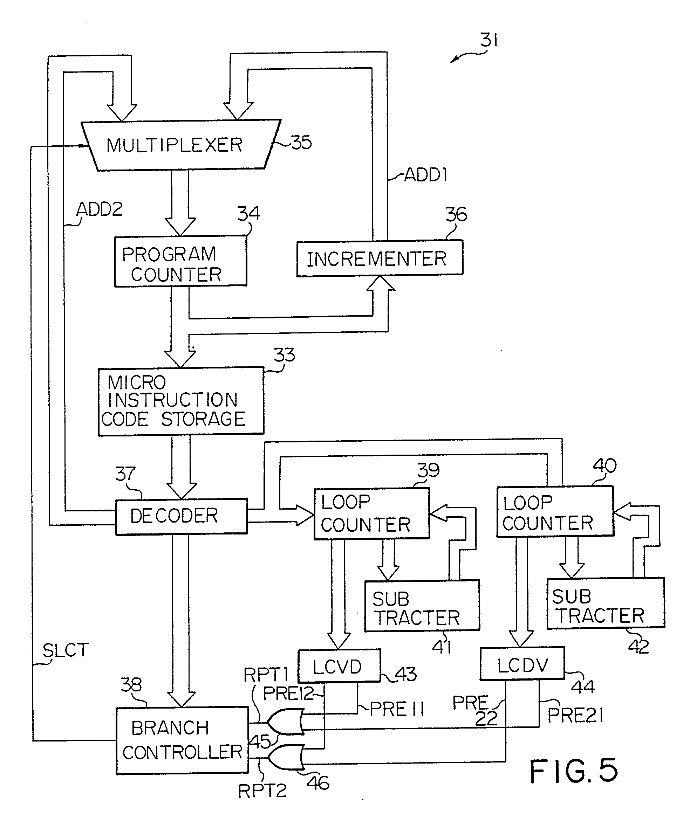

Turning to Fig. 5 of the drawings, a microprogrammed control unit 31 comprises a micro-instruction code storage 33, a program counter 34, a multiplexer 35, an incrementer 36, a decoder 37, a branch controller 38, first and second loop counters 39 and 40, first and second subtracters 41 and 42, first and second count value detecting circuits 43 and 44 and two OR gates 45 and 46. Since the micro-instruction storage 33, the program counter 34, the multiplexer 35, the incrementer 36, the decoder 37 and the branch controller 38 respectively correspond to those forming parts of the micro-programmed control unit 11, no detailed description is made thereon.

The first loop counter 39 is supplied with a first data code indicative of the number of bytes left in the memory, and the second loop counter 40 stores a second data code indicative of the number of bytes transferred to a destination. The numbers of the bytes respectively memorized in the first and second loop counters 39 and 40 are respectively decreased by the first and second subtracters 41 and 42 upon decoding a branch instruction code. The first count number detecting circuit 43 checks the value of the first data code to see if all of the bits of the first data code and higher order bits except for the lowest two bits indicate value "0". If the high order bits of the first data code is indicative of value "0", the first count value detecting circuit 43 produces a first preliminary reporting signal PRE11; however, if all of the bits are indicative of value "0", a second preliminary reporting signal PRE12 takes place. In a similar manner, if the high order bits of the second data code is indicative of value "0", the second count value detecting circuit 43 produces a first preliminary reporting signal PRE21; however, if all of the bits are indicative of value "0", a second preliminary reporting signal PRE22 takes place on the signal line. The first preliminary reporting signal PRE11 is ORed with the first preliminary signal PRE21, and the first OR gate 45 yields a first reporting signal RPT1. The second OR gate 46 carries out the OR operation on the second preliminary reporting signals PRE12 and PRE22 and produces a second reporting signal RPT2. These first and second reporting signals RPT1 and RPT2 are causative of first and second branch operations, respectively, as similar to the first embodiment. The microprogrammed control unit 31 thus arranged is responsive to the string instruction even though the numbers of the bytes stored in the loop counters 39 and 40 are different from each other.

The behavior of the microprogrammed control unit 31 and program sequence for the string instruction are largely similar to those of the microprogrammed control unit 11, and, for this reason, · description is focused the first and second reporting signals PRT1 and RPT2. As similar to the microprogrammed control unit 11, the control repeats a sub-loop containing the branch instruction code JZMLC and the micro-instruction codes requesting the word transferring operation until the first reporting signal RPT1 takes place. Since the first reporting signal RPT1 is produced in the presence of either preliminary first reporting signal PRE1 or PRE2, any over-flow and any lack of byte never takes place in the destination.

If the first reporting signal RPT1 takes place, the control is branched to the branch instruction code JZLC, and repeats the byte transferring operation until the second reporting signal RPT2. The second reporting signal RPT2 is produced in the presence of either preliminary reporting signal PRE12 or PRE22, so that the control exits from the byte transferring operation without any over-flow and non-intended byte transfer. When the second reporting signal RPT2 is produced, the control decides that the string instruction is completed and returns to, for example, a main routine program.

As will be understood from the foregoing description, the microprogrammed control unit according to the present invention is advantageous over the prior art microprogrammed control unit in that a given string instruction is rapidly completed because most of the bytes are transferred through a word transferring operation.

In fact, in order to transfer $m$ bytes of a character string or a bit string, the prior art microprogrammed control unit executes $(m+1)$ conditional branch instructions and $m$ byte transferring instructions. On the other hand, the microprogrammed control unit according to the present invention executes $((m\ \text{div.}\ 4) + (m\ \text{mod.}4) + 1)$ conditional branch instructions, $(m\ \text{div.}4)$ word transferring instructions and $(m\ \text{mod.}4)$ byte transfer instructions. For example, if a character string consists of twelve bytes, the prior art microprogrammed control unit executes thirteen conditional branch instructions and twelve byte transferring instructions, however, the microprogrammed control unit of the present invention completes the string instruction with four conditional branch instructions and four word transferring instructions.

Although particular embodiments of the present invention have been shown and described, it will be obvious to those skilled in the art that various changes and modifications may be made without departing from the spirit and scope of the present invention. For example, each of the microprogrammed control unit 11 and 31 transfers a word consisting of four bytes in a single word transferring operation, however, another implementation may transfer a word consisting of two bytes. In such an implementation, the first reporting signal RPT1 or the first preliminary reporting signals PRE11 and PRE21 are produced if the bits except for the least significant bit are indicative of value "0".

## Claims

1. A microprogrammed control unit responsive to a string instruction for transferring a predetermined number of bytes of a character string or a bit string through a plurality of transferring operations, comprising a) a loop counter for memorizing a multi-bit data code indicative of the number of said bytes which have not been transferred yet, and b) calculating means operative to vary the number of said bytes indicated by said multi-bit data code, characterized by c) first branch controlling means for executing a first branch operation when said data code except for at least the least significant bit indicates a first preselected value, d) second branch controlling means for executing a second branch operation when said multi-bit data code indicates a second preselected value, and e) deciding means for making a decision that said predetermined number of bytes have been already transferred after said first branch operation and, thereafter, said second branch operation is completed. a plurality of bytes being simultaneously transferred in each transferring operation before said first branch operation, each byte being transferred in each transferring operation between said first and second branch operations.

2. A microprogrammed control unit responsive to a string instruction for transferring a predetermined number of bytes of a character string or a bit string through a plurality of transferring operations, comprising; a) a micro-instruction code storage operative to store a set of micro-instruction codes respectively assigned to addresses; b) a program counter operative to memorize an address code indicative of one of the addresses in a rewriteable manner; c) a decoder operative to produce a plurality of data and/or control signals on the basis of the micro-instruction code read out from the micro instruction code storage, the plurality of data and/or control signals including a data signal indicative of the predetermined number of the bytes, first and second control signals respectively indicative of first and second branch operations and an address signal indicative of the address assigned the micro-instruction code firstly read out in the first or second branch operation; d) a loop counter operative to store the data signal in a rewriteable manner; e) a subtracter operative to decrease the value indicated by the data signal and to feed back the data signal to the loop counter; f) a count value detecting circuit operative to produce a first reporting signal when higher order bits of the data signal indicate a first predetermined value, the count value detecting circuit further producing a second reporting signal in the presence of the data signal indicative of a second predetermined value; g) a branch controller operative to produce a selecting signal in the co-presence of the first control signal and the first reporting signal and of the second control signal and the second reporting signal; h) an incrementer operative to increment the address indicated by the address code and producing another address signal; and i) a multiplexer operative to transfer the address signal to the program counter in the presence of the selecting signal for the first branch operation and to transfer the other address signal to the program counter in the absence of the selecting signal for the second branch operation, in which a plurality of the bytes are simultaneously transferred to in each transferring operation before the first branch operation, and in which each byte is transferred in each transferring operation between the first and second branch operations, wherein the string instruction is decided to be completed upon the second branch operation.

3. A microprogrammed control unit responsive to a string instruction for transferring a predetermined number of bytes of a character string or a bit string through a plurality of transferring operations, comprising: a) a micro-instruction code storage operative to store a set of micro-instruction codes respectively assigned to addresses; b) a program counter operative to memorize an address code indicative of one of the addresses in a rewriteable manner; c) a decoder operative to produce a plurality of data and/or control signals on the basis of the micro-instruction code read out from the micro-instruction code storage, the plurality of data and/or control signals including a first data signal indicative of the predetermined number of the bytes, a second data signal indicative of the number of the bytes capable of receipt, first and second control signals respectively indicative of first and second branch operations and an address signal indicative of the address assigned the micro-instruction code firstly read out in the first or second branch operation; d) a first loop counter operative to store the first data signal in a rewriteable manner; e) a first subtracter operative to decrease the value indicated by the first data signal and to feed back the first data signal to the first loop counter; f) a first count value detecting circuit operative to produce a first preliminary reporting signal when higher order bits of the first data signal indicate a first predetermined value, the first count value detecting circuit further producing a second preliminary reporting signal in the presence of the first data signal indicative of a second predetermined value; g) a second loop counter operative to store the second data signal in a rewriteable manner; h) a second subtracter operative to decrease the value indicated by the second data signal and to feed back the second data signal to the second loop counter; i) a second count value detecting circuit operative to produce a first preliminary reporting signal when higher order bits of the second data signal indicate the first predetermined value, the second count value detecting circuit further producing a second preliminary reporting signal in the presence of the second data signal indicative of the second predetermined value; j) a first OR gate operative to produce a first reporting signal in the presence of either first preliminary reporting signal; k) a second OR gate operative to produce a second reporting signal in the presence of either second preliminary reporting signal; 1) a branch controller operative to produce a selecting signal in the co-presence of the first control signal and the first reporting signal and of the second control signal and the second reporting signal; m) an incrementer operative to increment the address indicated by the address code and producing another address signal; and n) a multiplexer operative to transfer the address signal to the program counter in the presence of the selecting signal for the first branch operation and to transfer the another address signal to the program counter in the absence of the selecting signal for the second branch operation, in which a plurality of the bytes are simultaneously transferred to in each transferring operation before the first branch operation, and in which each byte is transferred in each transferring operation between the first and second branch operations, wherein the string instruction is decided to be completed upon the second branch operation.

4. A microprocessor repeating a transferring operation for data indicated by a plurality of bytes, comprising: a) a loop counter for retaining a bit string; b) means for varying a value indicated by said bit string by the number of bytes successively transferred upon each transferring operation, characterized by c) means for successively transferring a plurality of bytes until the value represented by the bits of said bit string except for at least the least significant bit is matched with a first predetermined value; and means activated after matching said value with said first predetermined value for transferring a single byte until the value represented by all of the bits of said bit string is matched with a second predetermined value.

FIG.1
PRIOR ART

FIG. 2

FIG.3

START

SR1
PRELIMINARY
SUBROUTINE

S1
STORE THE
NUMBER OF BYTES
IN LOOP COUNTER

S2
JZMLC

ALLOWED

NOT ALLOWED

S3
WORD
TRANSFER

S4
JZLC

ALLOWED

NOT ALLOWED

S5
BYTE
TRANSFER

S6
COMPLETION

RETURN

FIG. 4

FIG.5